# EUROPEAN PATENT APPLICATION

(11) **EP 1 770 475 A2**
(43) Date of publication of application: **04.04.2007**
(21) Application number: 06119847.9
(22) Date of filing: 31.08.2006
(51) Int. Cl.: G06F 1/16

(54) **Key Button Assembly for Portable Terminal**

(30) Priority: 05.09.2005 KR 20050082255
(71) Applicant: Samsung Electronics Co., Ltd., Suwon-si, Gyeonggi-Do (KR)
(72) Inventor: Moon, Byoung-Seoup, Gyeonggi-do, (KR)
(74) Representative: Grünecker, Kinkeldey, Stockmair & Schwanhäusser Anwaltssozietät

(57) **Abstract**

Provided is a portable terminal having a plurality of key buttons serving as a data input unit. Characters and numbers are engraved on the key buttons at a tilt angle. Therefore, the visibility of the assigned characters and numbers is improved in inputting data when the terminal is rotated for use at an angle. Consequently, the user can use the terminal conveniently.

## Description

The present invention relates to a key button assembly serving as a data input unit in portable terminals, and more particularly, to a key button assembly for a portable terminal, capable of providing users with good visibility of characters and numbers assigned on the key buttons when the portable terminal is rotated at an angle.

As the use of portable terminals has dramatically increased in recent years, various designs and functions additional to a calling function have been offered to satisfy the user's demands. The portable terminals have evolved from bar type to such designs as flip type, flip-up type and folder type terminals. Recently, the folder type terminals are being widely used. A spatial margin of the folder type terminals is so sufficient that such terminals utilize wide LCD modules as their display units. Also, since the folder type terminals can be folded in half, they are easy to carry, compared with other types of terminals.

Meanwhile, recent times have also witnessed the development of portable terminals that can employ a display unit with a wide LCD module that is similar in size to the folder type terminal, yet maintain a rather miniature size and still satisfy the user's various demands. One such terminal is a slide type terminal in which a sub body (hereinafter a slide body) slides over a main body by a predetermined distance in a length direction of the terminal. Compared with the folder type terminal, the slide type terminal may be even more capable of satisfying the varying preferences of users.

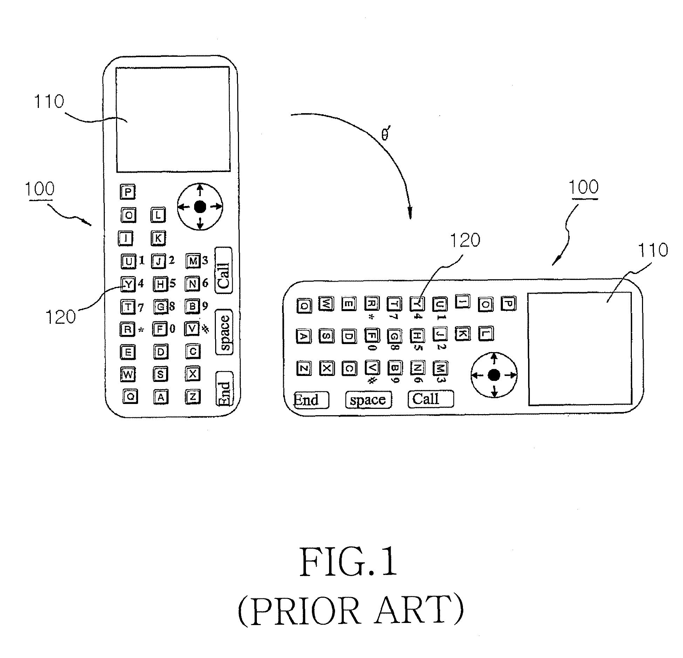

Additionally, a slide and rotation type terminal based on the folder type terminal and the slide type terminal has been introduced. In the slide and rotation type terminal, a sub body (i.e., a folder) and a slide body are rotatable in a predetermined direction. Specifically, by rotating the terminal at a predetermined angle (e.g., about 90°), a display unit is placed from a longitudinal direction to a transverse direction. In this manner, the user can arrange the terminal according to his/her preference. This is useful and convenient when executing a camera function or playing a game on the terminal. FIG. 1 is a view of a conventional portable terminal 100 when it is rotated at an angle (θ). As illustrated in the left side of FIG. 1, characters and numbers are engraved on key buttons 120 in the longitudinal direction. Therefore, when the terminal 100 is placed in the longitudinal direction, the characters and numbers are correctly oriented to the user's line of sight, thus providing good visibility. On the contrary, as illustrated in the right side of FIG. 1, when the terminal is placed in the transverse direction, the characters and numbers assigned in the longitudinal direction are rotated 90° such that they are no longer upright relative to the user's line of sight. This results in the degradation of visibility.

It is the object of the present invention to provide a key button assembly for a portable terminal, capable of improving visibility of characters and numbers engraved on key buttons even when the terminal is rotated.

This object is solved by the subject matter of the independent claims.

Preferred embodiments are defined by the subject matter of the dependent claims.

Also, according to an aspect of the present invention, a key button assembly for a portable terminal is provided that is capable of maximizing the convenience of use by engraving characters and numbers on key buttons at a tilt angle.

According to another aspect of the present invention, there is provided a key button assembly for a portable terminal including a plurality of key buttons serving as a data input unit, wherein characters and numbers are engraved on the key buttons at a tilt angle, thereby improving visibility of the engraved characters and numbers in inputting data when the terminal is rotated.

According to a further aspect of the present invention, there is provided a portable terminal including a plurality of key buttons serving as a data input unit, wherein characters and numbers are aligned on the key buttons at a tilted angle, thereby improving visibility of the assigned characters and numbers in inputting data when the terminal is rotated.

According to still another aspect of the present invention, there is provided a key button assembly for a portable terminal comprising a plurality of tilted key buttons serving as a data input unit, wherein characters and numbers are assigned on the key buttons, thereby improving visibility of the assigned characters and numbers in inputting data when the terminal is rotated.

According to still another aspect of the present invention, there is provided a portable terminal that includes a plurality of tilted key buttons serving as a data input unit, wherein characters and numbers are aligned on the key buttons at a tilted angle, thereby improving visibility of the assigned characters and numbers in inputting data when the terminal is rotated.

The present invention will become more apparent from the following detailed description when taken in conjunction with the accompanying drawings, in which:
FIG. 1 is a view of a conventional portable terminal when it is rotated at an angle;
FIG. 2 is a view of a portable terminal when it is rotated at an angle according to a first embodiment of the present invention;
FIG. 3 is a view of a portable terminal when it is rotated at an angle according to a second embodiment of the present invention; and
FIG. 4 is a view of a portable terminal when it is rotated at an angle according to a third embodiment of the present invention.

Reference will now be made in detail to the preferred embodiments of the present invention, examples of which are illustrated in the accompanying drawings. A detail description of well-known features will be omitted for the sake of clarity and conciseness.

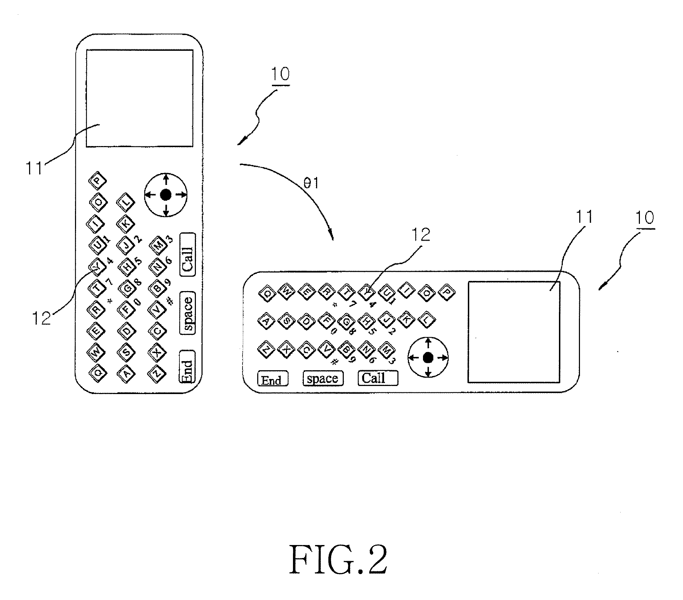

FIG. 2 is a view of a portable terminal when it is rotated at an angle according to a first embodiment of the present invention. Specifically, a bar type terminal 10 placed in the longitudinal direction is illustrated in the left side of FIG. 2, and the terminal 10 placed in the transverse direction in the right side of FIG. 2.

The characters and numbers are engraved on the key buttons 12 at a tilt angle, preferably 40 ~ 50°. When the terminal 10 is rotated for use at an angle θ1, the characters and numbers are engraved in a direction opposite to the rotating direction of the terminal 10. Accordingly, even if the terminal 10 is placed in the longitudinal direction (the left side of FIG. 2) or the transverse direction (the right side of FIG. 2), the user can see the engraved characters and numbers without having to turn his/her head relative to the angle θ1. That is, the engraved characters and numbers are clearly seen and readable.

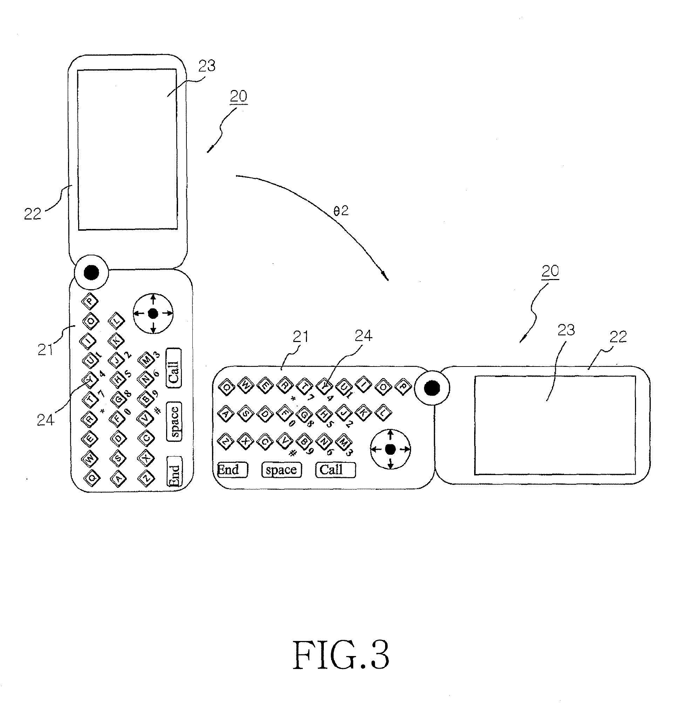

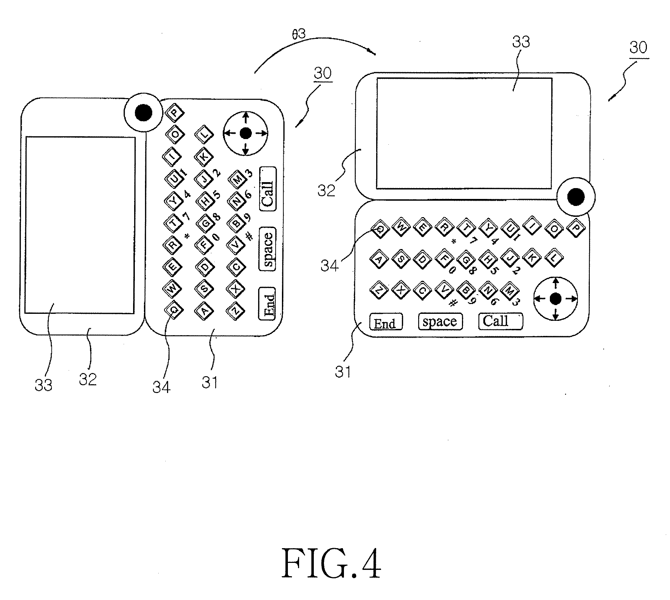

FIGs. 3 and 4 are views of portable terminals when they are rotated at an angle according to second and third embodiments of the present invention, respectively. Specifically, folder type terminals are illustrated in FIGs. 3 and 4.

Referring to FIGs. 3 and 4, the folder type terminals 20 and 30 include main bodies 21 and 31 and folders 22 and 32 that can be opened from the main bodies 21 and 31 at angles, respectively. Generally, display units 23 and 33 are mounted on the folders 22 and 32, respectively. Also, key button assemblies including a plurality of tilted key buttons 24 and 34 serving as data input units are provided at the main bodies 21 and 31, respectively. Characters and numbers are assigned on the key buttons 24 and 34. As described above, the characters and numbers are preferably aligned in a left direction with respect to the rotating axis of the terminal. Normally, rotation of the terminals 20 and 30 at respective angles θ2 and θ3 is to the right with respect to the rotating axis of the terminal.

Although not shown, the present invention can also be applied to various types of terminals that are rotated in use. Examples of the terminals include slide type terminals and pop-up type terminals.

According to the present invention, since the characters and numbers are engraved on the key buttons at an angle, the user can easily recognize the characters and numbers even if the terminal is used in the inclined state, thereby improving the convenience of use.

Also, a plurality of key buttons serving as a data input unit may be provided. Here, a plurality of key buttons are not tilted but characters and numbers are aligned at a tilted angle on the key buttons, thereby improving visibility of the assigned characters and numbers in inputting data when the terminal is rotated.

The foregoing embodiments are merely preferred and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A key button assembly for a portable terminal, comprising:
a plurality of key buttons adapted to perform as a data input unit, wherein characters and numbers are aligned on the key buttons at a tilted angle.

2. The key button assembly of claim 1, wherein the tilted angle is between 40 ∼ 50 degrees.

3. The key button assembly of claim 1, wherein the characters and numbers are tilted in a left direction with respect to the rotating axis of the terminal.

4. A portable terminal, comprising:
a plurality of key buttons adapted to perform as a data input unit, wherein characters and numbers are aligned on the key buttons at a tilted angle.

5. The portable terminal of claim 4, wherein the portable terminal is one of a bar-type, folder-type and slide-type terminal.

6. The portable terminal of claim 4 or 5, wherein the tilted angle is between 40 ∼ 50 degrees.

7. The portable terminal of claim 4 or 5, wherein the characters and numbers are tilted in a left direction with respect to a rotating axis of the terminal.

8. A key button assembly for a portable terminal, comprising:
a plurality of tilted key buttons adapted to perform as a data input unit, wherein characters and numbers are aligned on the key buttons at a tilted angle.

9. The key button assembly of claim 8, wherein the tilted angle is between 40 ∼ 50 degrees.

10. The key button assembly of claim 8, wherein the tilted key buttons are tilted in a left direction with respect to a rotating axis of the terminal.

11. A portable terminal, comprising:
a plurality of tilted key buttons adapted to perform as a data input unit, wherein characters and numbers are aligned on the key buttons at a tilted angle.

12. The portable terminal of claim 11, wherein the portable terminal is one of a bar-type, folder-type and slide-type terminal.

13. The portable terminal of claim 11 or 12, wherein the tilted angle is between 40 ∼ 50 degrees.

14. The portable terminal of claim 11 or 12, wherein the tilted key buttons are tilted in a left direction with respect to a rotating axis of the terminal.
